# FASCICULE DE BREVET EUROPEEN

(11) **EP 1 918 066 B1**
(45) Date de publication et mention de la délivrance du brevet: **06.05.2009**
(21) Numéro de dépôt: 07119456.7
(22) Date de dépôt: 29.10.2007
(51) Int. Cl.: B23Q 3/06, B23Q 3/08

(54) **Dispositif support de pièce**
Haltevorrichtung für Werkstück
Part supporting device

(30) Priorité: 03.11.2006 CH 17442006
(43) Date de publication de la demande: 07.05.2008
(73) Titulaire: Yerly, Michel, 2864 Soulce (CH)
(72) Inventeur: Yerly, Michel, 2864 Soulce (CH)
(74) Mandataire: P&TS Patents & Technology Surveys SA

(56) Documents cités:
- WO-A-20/06003683
- US-A- 3 572 216

## Description

### Domaine technique

La présente invention concerne un dispositif support de pièce pour maintenir une pièce lors de son usinage selon le préambule de la revendication 1 et comme connu par US-A-3,572,216. La présente invention concerne en particulier un dispositif permettant de maintenir une pièce fixe face à un outil mobile, notamment dans un centre d'usinage à plusieurs axes.

De nombreuses solutions existent dans l'art antérieur pour maintenir une pièce lors de son usinage. Les pièces épaisses sont souvent maintenues par un étau ou par un mandrin en appui sur les faces latérales externes de la pièce. Le document W02006/003683 par exemple décrit un dispositif de maintien et de centrage d'une pièce à usiner, typiquement des roues de voiture, grâce à des éléments déplacés dans une direction radiale par rapport à l'axe de centrage.

Cette solution n'est cependant pas adaptée au maintien de pièces fines qui seraient déformées par une forte pression sur leurs faces latérales. En particulier, l'usinage des ponts et des platines dans l'horlogerie nécessite des protections particulières.

Il existe également des dispositifs de maintien qui permettent de plaquer une pièce à usiner contre une surface d'appui. Le document US3572216 par exemple décrit un dispositif de maintien de pièces comprenant une bride pivotante reliée à un piston hydraulique.

Une difficulté survient cependant lors du détourage d'une petite pièce que l'on souhaite séparer d'une platine ou d'une plaque plus grande. Dans ce cas, la pièce détourée n'est généralement plus maintenue après sa séparation. Souvent, la petite surface des pièces à détourer ne permet pas de les plaquer facilement, notamment lorsque la surface supérieure de la pièce détourée doit être travaillée.

Dans l'art antérieur, les pièces détourées sont ainsi souvent reprises manuellement ou par un robot avant d'être transférées sur une machine pour être maintenues différemment. Cette opération de reprise est coûteuse et ralentit l'ensemble du processus d'usinage.

### Bref résumé de l'invention

Un but de la présente invention est de proposer un dispositif support de pièce exempt des limitations des dispositifs connus.

Un autre but de l'invention est de proposer un dispositif support de pièce adapté au maintien de pièces plates lors d'opérations de détourage.

Selon l'invention, ces objectifs sont atteints notamment au moyen d'un dispositif support de pièce pour maintenir une pièce lors de son usinage, comportant :
une surface d'appui,
une ou plusieurs brides mobiles pour plaquer ladite pièce contre la surface d'appui lorsque les brides appuient contre la face supérieure de ladite pièce, les brides pouvant être relevées lors de l'introduction et de l'extraction de la pièce,
un ou plusieurs mors mobiles dans un plan parallèle à ladite surface d'appui afin de maintenir au moins une portion de ladite pièce par ses faces latérales.

Le dispositif de l'invention permet à la fois de plaquer efficacement la pièce usinée au moyen des brides, et de maintenir une portion détourée au moyen des mors se déplaçant dans un plan horizontal.

L'invention concerne également un procédé d'usinage de pièce comportant les étapes suivantes :
a) placement de ladite pièce sur la surface d'appui d'un dispositif support de pièce ;
b) plaquage de ladite pièce contre ladite surface d'appui au moyen d'une ou plusieurs brides mobiles;
c) maintien d'au moins une portion de ladite pièce en déplaçant des mors dans un plan parallèle à ladite surface d'appui afin de maintenir ladite portion par ses faces latérales ;
d) usinage de ladite pièce.

### Brève description des dessins

Des exemples de mise en oeuvre de l'invention sont indiqués dans la description illustrée par les figures annexées dans lesquelles :
La figure 1 illustre une vue en coupe du dispositif selon l'invention.
La figure 2 illustre une vue en coupe du dispositif selon l'invention, selon une direction perpendiculaire à la figure 1.
La figure 3 est une vue de dessus du dispositif selon l'invention.
La figure 4 illustre un exemple de pièce avantageusement usinée en employant un dispositif de maintien selon l'invention.

### Exemple(s) de mode de réalisation de l'invention

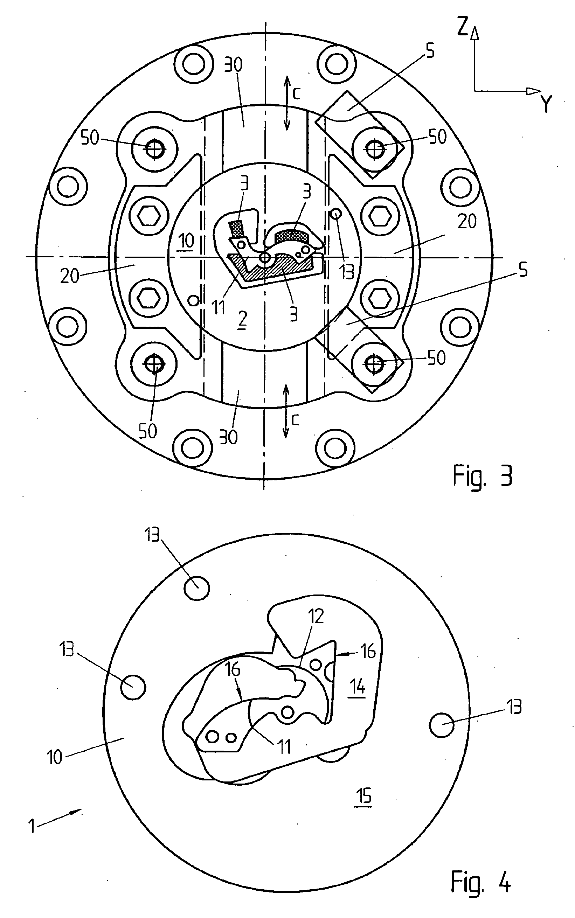

La figure 4 illustre un exemple de pièce 1 pouvant être maintenue sur un dispositif selon l'invention. La pièce illustrée comporte une portion externe 10 et une portion interne 11. Dans l'exemple illustré, la portion interne est destinée à être employée comme pont ou comme platine dans un mouvement d'horlogerie. Les portions internes et externes sont séparées l'une de l'autre par une ouverture 14 pré-usinée, et liées l'une à l'autre par un ou plusieurs liens 12. Le dispositif de maintien de l'invention permet par exemple de maintenir les portions internes et externes de la pièce 1 lors du détourage, c'est-à-dire lors du fraisage ou de la découpe des liens 12 afin de séparer les portions 10 et 11. D'autres opérations peuvent être effectuées sur les pièces maintenues, y compris par exemple des opérations de perçage, d'anglage, de guillochage, de diamantage ou d'autres opérations imaginables selon les outils disponibles.

La pièce 1 est relativement fine et comporte une surface supérieure 15 et une surface inférieure (non référencée). Des ouvertures traversantes 13 permettent de centrer la pièce sur le dispositif de maintien en y insérant des goupilles. La référence 16 désigne les faces latérales de la portion interne 11.

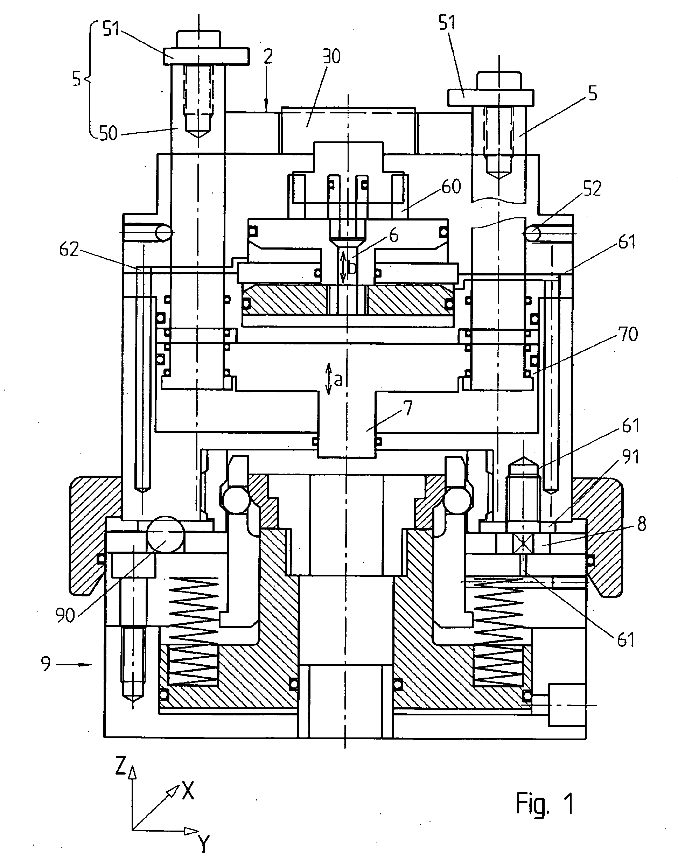

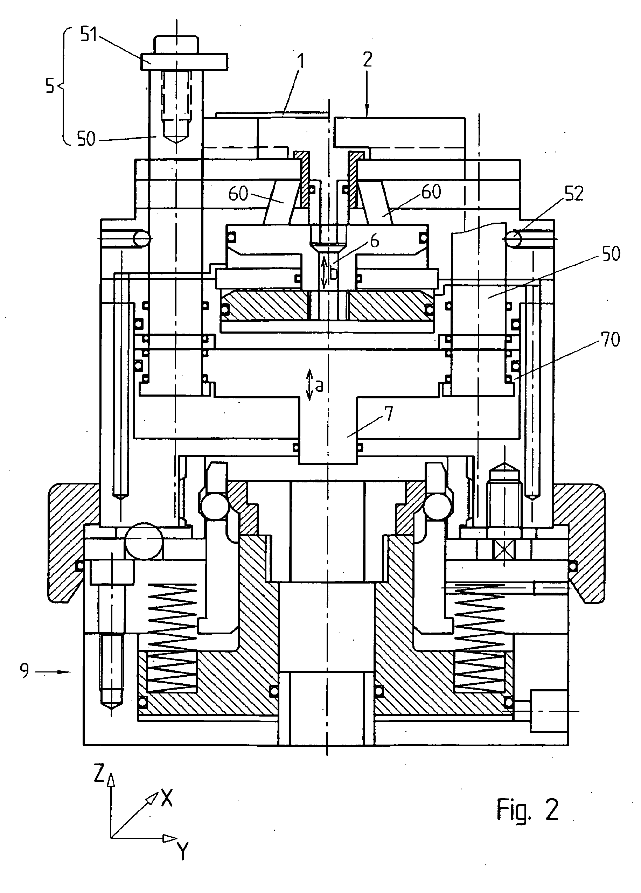

Le dispositif de maintien de la pièce est illustré sur les figures 1 à 3. La pièce à usiner est posée manuellement ou à l'aide d'un robot sur la surface d'appui 2 en la centrant au moyen de goupilles insérées dans les ouvertures 123 de la pièce. Dans une variante préférentielle, les goupilles sont solidaires de platines (segments) 10 usinées selon la forme de la pièce. Les platines sont amovibles et peuvent être remplacées très facilement en dévissant les vis de fixation au corps du dispositif. Il est ainsi possible d'employer le dispositif de maintien avec d'autres pièces à usiner, munis de trous ou d'éléments de centrage disposés différemment, simplement en remplaçant la ou les platines 10. La surface d'appui est constituée au moins en partie par la face supérieure des platines 10. Il est aussi possible de prévoir une surface d'appui non plane, par exemple pour poser une pièce à usiner d'épaisseur irrégulière.

La pièce à usiner 1 est plaquée sur la surface d'appui 2 au moyen des brides 5. Dans l'exemple illustré, le dispositif de maintien comporte 4 brides espacées angulairement de 90° l'une de l'autre. Un nombre de brides différent, par exemple une seule bride, deux brides, trois brides pour garantir un positionnement isostatique, ou plus de quatre brides, peut aussi être employé.

Chaque bride comporte une tige 50 parallèle à l'axe Z (par exemple l'axe vertical) ainsi qu'une portion d'appui excentrique 51 destinée à venir en appui sur la surface supérieure de la pièce 1. Dans l'exemple illustré, la portion excentrique est constituée par une patte rectangulaire dont une extrémité est fixée par une vis ou un boulon à la tige 50. Des formes de brides complètement différentes, y compris des brides comportant des surfaces d'appui sur la pièce non planes, peuvent être imaginées. Les brides peuvent être réalisées en acier, en laiton, etc, ou dans une matière plus tendre pour ne pas rayer la pièce, par exemple en aluminium, en matériau synthétique (nylon, PVC, etc) ou composite (fibres de carbone, etc).

Les différentes brides sont mobiles et peuvent être déplacées selon l'axe Z au moyen d'un piston 7 actionné par air comprimé le long de la flèche a. Le piston 7 entraîne les quatre brides simultanément. En position abaissée, les portions excentriques des quatre brides appuient contre une portion périphérique de la face supérieure de la partie externe de la pièce 1, afin de plaquer cette pièce contre la surface d'appui 2. En position relevée, les brides permettent le chargement de la pièce avant usinage, ou son extraction après usinage. Dans la variante préférentielle illustrée, les tiges pivotent de 90° lors de leur déplacement vertical, afin de faciliter l'introduction et l'extraction de la pièce 1 par le haut de la figure. Dans ce but, une bille 52 en métal dur est engagée dans une fraisure non représentée sur la surface périphérique de la tige 50 afin de forcer cette dernière à pivoter lorsqu'elle est déplacée.

Le dispositif de maintien comporte en outre des mors 3 visibles en particulier sur la figure 3 et qui permettent de maintenir la portion interne 11 de la pièce à usiner 1 par appui sur ses faces latérales 16. La forme et la position des mors sont adaptées à la forme et à la dimension de la portion interne 11. Dans l'exemple illustré, le dispositif de maintien comporte trois mors venant en appui sur trois portions disjointes de la face latérale 16, entre les liens 12. Des nombres de mors différents peuvent cependant être employés selon la géométrie et la dimension de la pièce à usiner. De même, les mors peuvent être réalisés dans différents matériaux, par exemple en acier, ou dans un matériau plus mou afin d'éviter de rayer la pièce (laiton, aluminium, matériau synthétique tel que nylon, matériau composite tel que fibre de carbone, etc)

Les mors 3 sont montés sur des supports de mors mobiles 30 susceptibles de se déplacer dans le plan X-Y. Les mors 3 et les supports de mors 30 sont de préférence constitués d'une seule pièce, afin d'éviter les difficultés d'ajustement. Dans l'exemple illustré, les deux mors 3 supérieurs sur la figure 3 sont liés à un premier support de mors 30 qui se déplace du haut vers le bas, selon la flèche C, lors du serrage. Le mors inférieur est lié à un support de mors 30 distinct qui effectue un mouvement d'amplitude égale mais de sens opposé, c'est-à-dire du bas vers le haut lors de la fermeture. Les deux mors se déplacent ainsi radialement l'un contre l'autre, de manière à centrer automatiquement la pièce lors du serrage. Il est cependant possible dans le cadre de l'invention d'employer un nombre de porte-mors différents, par exemple trois mors espacés de 120° angulaires se déplaçant radialement, 4 mors espacés de 90°, ou même un seul mors mobile se déplaçant contre un mors fixe à la manière d'un étau. Il est aussi possible d'employer plusieurs mors fixes et un ou plusieurs mors mobiles. Les mors ou les supports de mors sont de préférence interchangeables et peuvent être remplacés par simple dévissage, par exemple afin d'usiner une pièce de forme différente.

Les mors sont actionnés dans le plan horizontal X-Y au moyen du piston vertical 6 mobile selon la flèche b. Les mouvements en Z du piston sont convertis en mouvements horizontaux au moyen de surfaces coulissantes obliques 60. Le piston 6 est actionné pneumatiquement, tout comme le piston 7. La figure 1 permet d'observer l'arrivée d'air 61 permettant de commander le relèvement du piston, ainsi que l'arrivée d'air 62 opposée permettant de commander l'abaissement du piston 7.

Le circuit pneumatique permettant de commander les mors 3 est de préférence indépendant du circuit pneumatique commandant les brides 5. Il est ainsi possible d'ouvrir ou de fermer les brides indépendamment des mors. Dans une variante préférentielle, le dispositif de l'invention comporte donc quatre entrées d'air comprimé distinctes pour commander les quatre déplacements suivantes :
- Abaissement des brides 5 pour plaquer la pièce
- Relèvement des brides 5
- Fermeture des mors 3 pour serrer la portion interne 11
- Ouverture des mors 3.

Des entrées d'air additionnelles peuvent être prévues au niveau de la palette 9, afin notamment se solidariser ou de désolidariser le dispositif support, et de nettoyer les surfaces de contact au moyen d'un bref jet d'air horizontal.

L'invention n'est cependant pas limitée à un dispositif muni de pistons pneumatiques ; des actuateurs électromécaniques peuvent aussi être mis en oeuvre pour actionner les mors et les brides. Par ailleurs, il est aussi possible dans le cadre de l'invention de prévoir des mors 3 capables de se déplacer selon un axe vertical Z.

Le dispositif de maintien est de préférence palettisable. Dans ce but, sa surface inférieure est munie de pieds 8 permettant un accouplement amovible précis et reproductible sur une palette 9, par exemple une palette du type décrit dans le brevet EP1364746 du déposant. La précision du positionnement est assurée notamment au moyen de sphères 90 et d'une plaque de centrage comportant des portions déformables. L'air comprimé commandant l'ouverture et la fermeture des brides et des mors peut être injecté dans le dispositif de l'invention au travers de la palette 9 par des trous traversant les quatre pieds 8.

Une pièce 1 à usiner est tout d'abord placée sur la surface d'appui 2 du dispositif, à la main ou au moyen d'un robot. Le centrage est effectué à l'aide des goupilles 13 ou d'éléments de centrage mâle ou femelle équivalents. Les mors 3 saillants au dessus de la surface d'appui 2 sont introduits dans au moins une ouverture 14 au travers de la pièce 1.

La pièce à usiner est ensuite plaquée contre la surface 2 au moyen des brides 5 entraînées vers le bas. La portion interne de la pièce est ensuite maintenue au moyen des mors 3 qui se referment contre des portions des surfaces latérales de l'ouverture 14. La pièce est alors fermement maintenue et peut être usinée, par exemple afin de détourer la portion interne 11 en coupant les liens 12. Il est aussi possible d'effectuer d'autres opérations sur la portion interne 11 et éventuellement sur la portion externe 12. Il est aussi possible dans le cadre de l'invention de déplacer des mors dans le plan X, Y ou même selon un axe linéaire Z ou un axe de rotation, au terme d'une opération d'usinage, ou entre deux opérations d'usinage. Des déplacements des mors non radiaux, ou de l'intérieur vers l'extérieur lors d'un serrage, sont aussi envisageables.

### Liste des numéros de référence sur les figures

- 1: Pièce usinée
- 10: Portion externe de la pièce 1
- 11: Portion interne de la pièce 1
- 12: Lien
- 13: Trou de passage pour goupilles
- 14: Ouverture
- 15: Face supérieure de la pièce
- 16: Faces latérales de la portion interne
- 2: Surface d'appui du dispositif
- 20: Platine interchangeable
- 3: Mors mobiles
- 30: Support mobile des mors
- 5: Brides mobiles
- 50: Tige des brides mobiles
- 51: Portion excentrique des brides mobiles
- 6: Piston de déplacement des mors
- 60: Biais
- 61: Amenée d'air pour soulever le piston 60
- 62: Amenée d'air pour descendre le piston 60
- 7: Piston de déplacement des brides
- 70: Roulement de piston 70
- 8: Pieds
- 9: Palette
- 90: Bille de centrage sur palette
- 91: Plaque de centrage

## Revendications

1. Dispositif support de pièce pour maintenir une pièce (1) lors de son usinage, comportant :
une surface d'appui (2),
une ou plusieurs brides mobiles (5) pour plaquer ladite pièce contre la surface d'appui lorsque les brides appuient contre la face supérieure de ladite pièce, les brides pouvant être relevées lors de l'introduction et de l'extraction de la pièce (1),
ledit dispositif étant **caractérisé par**
un ou plusieurs mors mobiles (3, 30) dans un plan (X-Y) parallèle à ladite surface d'appui afin de maintenir au moins une portion (11) de ladite pièce par ses faces latérales (16).

2. Le dispositif de la revendication 1, dans lequel lesdites brides (5) peuvent être actionnées indépendamment desdits mors (3, 30).

3. Le dispositif de l'une des revendications 1 ou 2, dans lequel lesdits mors mobiles (3) sont destinés à venir en appui contre une portion d'une ouverture (14) de ladite pièce.

4. Le dispositif de l'une des revendications 1 à 3, dans lequel lesdits mors mobiles (3, 30) ont une surface d'appui non plane, correspondant à la surface d'appui de la pièce à usiner,
et dans lequel lesdits mors mobiles (3, 30) sont interchangeables.

5. Le dispositif de l'une des revendications 1 à 4, dans lequel lesdits mors mobiles (3, 30) sont destinés à venir en appui contre une face latérale (16) d'une ouverture (14) dans ladite pièce ;
lesdites brides mobiles (5) venant en appui contre une portion périphérique (10) de la face supérieure (15) de ladite pièce.

6. Le dispositif de l'une des revendications 1 à 5, comportant plusieurs mors mobiles (3, 30) radialement de façon synchronisée de manière à centrer automatiquement ladite pièce.

7. Le dispositif de l'une des revendications 1 à 5, comportant au moins un mors mobile et au moins un mors fixe.

8. Le dispositif de l'une des revendications 1 à 7, lesdits mors mobiles (3, 30) étant actionnés au moyen d'un système pneumatique.

9. Le dispositif de la revendication 8, comportant un piston (6) mobile actionné pneumatiquement dans une direction perpendiculaire à ladite surface d'appui (2), et des moyens de renvoi (60) pour convertir les déplacements du piston en déplacements des mors (3, 30) parallèlement à ladite surface d'appui.

10. Le dispositif de l'une des revendications 1 à 9, dans lequel lesdites brides mobiles (5) comportent chacune une tige (50) et une portion d'appui excentrique (51),
ladite tige (50) pouvant être déplacée perpendiculairement à ladite surface d'appui (2) entre une position relevée permettant l'introduction et l'extraction de ladite pièce et une position abaissée permettant le placage de ladite pièce par appui desdites portions d'appui excentriques (51) contre la face supérieure de la pièce (15),
ladite tige et ladite portion d'appui excentrique pivotant autour de l'axe longitudinal de la tige lors du déplacement de la tige.

11. Le dispositif de l'une des revendications 1 à 10, comportant trois brides mobiles (5) ou plus actionnées simultanément pour venir en appui sur trois points différents de ladite pièce.

12. Le dispositif de l'une des revendications 1 à 11, lesdites brides mobiles (5) étant actionnées au moyen d'un système pneumatique (7).

13. Le dispositif de l'une des revendications 1 à 12, ladite surface d'appui étant munie de goupilles (13) ou d'autres éléments de centrage mâles ou femelles pour centrer ladite pièce (1) sur la surface d'appui (2).

14. Le dispositif de la revendication 13, ladite surface d'appui (2) comportant au moins une platine interchangeable (20), lesdites goupilles ou autres éléments de centrage étant liés à ladite platine interchangeable.

15. Le dispositif de l'une des revendications 1 à 14, la surface inférieure du dispositif étant agencée pour permettre une palettisation.

16. Le dispositif de la revendication 15, la surface inférieure du dispositif comportant au moins quatre pieds (8).

17. Le dispositif de l'une des revendications 15 ou 16, comportant au moins quatre entrées d'air comprimé pour commander l'ouverture des brides, la fermeture des brides, l'ouverture des mors et la fermeture des mors.

18. Procédé d'usinage de pièce comportant les étapes suivantes :
a) placement de ladite pièce (1) sur la surface d'appui (2) d'un dispositif support de pièce ;
b) plaquage de ladite pièce contre ladite surface d'appui au moyen d'une ou plusieurs brides mobiles (5) ;
c) usinage de ladite pièce,
**caractérisé par** une étape de
d) maintien d'au moins une portion (11) de ladite pièce en déplaçant au moins un mors (3) dans un plan (X-Y) parallèle à ladite surface d'appui (2) afin de maintenir ladite portion par ses faces latérales.

19. Le procédé de la revendication 18, ledit usinage comportant une opération de détourage de ladite portion afin de la séparer du reste de la pièce.

20. Le procédé de la revendication 19, dans lequel, au terme du détourage :
ladite portion (11) est maintenue par lesdits mors (3),
ledit reste de la pièce (1) est maintenu par lesdites brides (5).

## Claims

1. Part holding device for holding a part (1) while it is being machined, having:
a resting surface (2),
one or several mobile straps (5) for pinning said part against the resting surface when the straps rest against the upper side of said part, the straps being capable of being raised when the part (1) is inserted and extracted,
said device being **characterized in**
one or several mobile chuck jaws (3, 30) in a plane (X-Y) parallel to said resting surface in order to hold at least one portion (11) of said part by its lateral sides (16).

2. The device of claim 1, wherein said straps (5) can be actuated independently from said chuck jaws (3, 30).

3. The device of one of the claims 1 or 2, wherein said mobile chuck jaws (3) are designed to come and rest against a portion of an opening (14) of said part.

4. The device of one of the claims 1 to 3, wherein said mobile chuck jaws (3, 30) have a non-plane resting surface, corresponding to the resting surface of the part to be machined,
and wherein said mobile chuck jaws (3, 30) are interchangeable.

5. The device of one of the claims 1 to 4, wherein said mobile chuck jaws (3, 30) are designed to come and rest against a lateral side (16) of an opening (14) in said part;
said mobile straps (5) coming to rest against a peripheral portion (10) of the upper side (15) of said part.

6. The device of one of the claims 1 to 5, comprising several mobile chuck jaws (3, 30) radially a in synchronized manner in order to center automatically said part.

7. The device of one of the claims 1 to 5, comprising at least one mobile chuck jaw and at least one fixed chuck jaw.

8. The device of one of the claims 1 to 7, said mobile chuck jaws (3, 30) being actuated by means of a pneumatic system.

9. The device of claim 8, comprising a mobile piston (6) actuated pneumatically in a direction perpendicular to said resting surface (2), and returning means (60) for converting the displacements of the piston into displacements of the chuck jaws (3, 30) in parallel to said resting surface.

10. The device of one of the claims 1 to 9, wherein said mobile straps (5) comprising each a rod (50) and an eccentric resting portion (51),
said rod (50) being capable of being displaced perpendicularly to said resting surface (2) between a raised position allowing said part to be inserted and extracted and a lowered position allowing said part to be pinned by resting said eccentric resting portions (51) against the upper side of the part (15),
said rod and said eccentric resting portion pivoting around the rod's longitudinal axis when the rod is displaced.

11. The device of one of the claims 1 to 10, comprising three or more mobile straps (5) actuated simultaneously to come and rest on three different points of said part.

12. The device of one of the claims 1 to 11, said mobile straps (5) being actuated by means of a pneumatic system (7).

13. The device of one of the claims 1 to 12, said resting surface being provided with pins (13) or other male or female centering elements for centering said part (1) on said resting surface (2).

14. The device of claim 13, said resting surface (2) comprising at least an interchangeable plate (20), said pins or other centering elements being connected to said interchangeable plate.

15. The device of one of the claims 1 to 14, the lower surface of the device being arranged to allow palletization.

16. The device of claim 15, the inner surface of the device having at least four feet (8).

17. The device of one of the claims 15 or 16, comprising at least four inlets of compressed air to control the opening of the straps, the closing of the straps, the opening of the chuck jaws and the closing of the chuck jaws.

18. Method for machining a part comprising the following steps:
a) placing said part (1) onto the resting surface (2) of a part holding device;
b) pinning said part against said resting surface by means of one or several mobile straps (5);
c) machining said part
**characterized in** the step of
d) holding at least one portion (11) of said part by moving at least one chuck jaw (3) in a plane (X-Y) parallel to said resting surface (2) in order to hold said portion by its lateral sides;

19. The method of claim 18, said machining comprising an operation of cutting off said portion in order to separate it from the rest of the part.

20. The method of claim 19, wherein at the end of the cutting off:
said portion (11) is held by said chuck jaws (3),
said rest of the part (1) is held by said straps (5).

## Patentansprüche

1. Haltevorrichtung für Werkstück, um ein Werkstück (1) während dessen Bearbeitung zu halten, mit:
einer Auflagefläche (2),
einem oder mehreren beweglichen Flansche (5), um das besagte Werkstück gegen die Auflagefläche zu halten, während die Flansche gegen die Oberseite des besagten Werkstücks drücken, wobei die Flansche während des Einfügens und des Entfernens des Werkstücks (1) hochgehoben werden können,
wobei die besagte Vorrichtung **gekennzeichnet ist durch**
eine oder mehrere bewegliche Backen (3, 30) in einer zur besagten Auflagefläche parallelen Ebene (X-Y), um mindestens eine Portion (11) des besagten Werkstücks **durch** seine Seitenflächen (16) zu halten.

2. Die Vorrichtung von Anspruch 1, worin die besagten Flansche (5) unabhängig von den besagten Backen (3, 30) betätigt werden können.

3. Die Vorrichtung eines der Ansprüche 1 oder 2, worin die besagten beweglichen Backen (3) dazu bestimmt sind, gegen eine Portion einer Öffnung (14) des besagten Werkstücks zu ruhen.

4. Die Vorrichtung eines der Ansprüche 1 bis 3, worin die besagten beweglichen Backen (3, 30) eine nicht ebene Auflagefläche aufweisen, entsprechend der Auflagefläche des zu bearbeitenden Werkstücks,
und worin die besagten beweglichen Backen (3, 30) auswechselbar sind.

5. Die Vorrichtung eines der Ansprüche 1 bis 4, worin die besagten beweglichen Backen (3, 30) dazu bestimmt sind, gegen eine Seitenfläche (16) einer Öffnung (14) im besagten Werkstück zu ruhen;
wobei die beweglichen Flansche (5) gegen eine periphere Portion (10) der Oberseite (15) des besagten Werkstücks ruhen.

6. Die Vorrichtung eines der Ansprüche 1 bis 5, mit mehreren radial beweglichen Backen (3, 30) auf synchrone Weise, um das besagte Werkstück automatisch zu zentrieren.

7. Die Vorrichtung eines der Ansprüche 1 bis 5, mit mindestens einer beweglichen Backe und mindestens einer festen Backe.

8. Die Vorrichtung eines der Ansprüche 1 bis 7, wobei die besagten beweglichen Backen (3, 30) mittels eines pneumatischen Systems betätigt werden.

9. Die Vorrichtung von Anspruch 8, mit einem beweglichen Kolben (6), der in eine zur besagten Auflagefläche (2) senkrechte Richtung pneumatisch betätigt wird, und mit Umlenkmitteln (60), um die Kolbenbewegungen in Bewegungen der Backen (3, 30) parallel zur besagten Auflagefläche zu konvertieren.

10. Die Vorrichtung eines der Ansprüche 1 bis 9, worin die besagten beweglichen Flansche (5) jeweils einen Schaft (50) und einen exzentrischen Auflageteil (51) aufweisen,
wobei der besagte Schaft (50) senkrecht zur besagten Auflagefläche (2) zwischen einer hochgeschlagenen Position, welche das Einfügen und das Entfernen des besagten Werkstücks ermöglicht, und einer gesenkten Position, welche das Halten des besagten Werkstücks durch Auflage der besagten exzentrischen Auflageteile (51) gegen die Oberseite des Werkstücks (15) erlaubt, bewegt werden kann,
wobei der besagte Schaft und der besagte exzentrische Auflageteil um die Längsachse des Schafts während der Bewegung des Schafts drehen.

11. Die Vorrichtung eines der Ansprüche 1 bis 10, mit drei oder mehr beweglichen Flanschen (5), die gleichzeitig betätigt werden, um auf drei unterschiedliche Punkte des besagten Werkstücks zu ruhen.

12. Die Vorrichtung eines der Ansprüche 1 bis 11, wobei die besagten beweglichen Flansche (5) mittels eines pneumatischen Systems (7) betätigt werden.

13. Die Vorrichtung eines der Ansprüche 1 bis 12, wobei die besagte Auflagefläche mit Stiften (13) oder anderen männlichen oder weiblichen Zentrierungselementen versehen ist, um das besagte Werkstück (1) auf der besagten Auflagefläche (2) zu zentrieren.

14. Die Vorrichtung von Anspruch 13, wobei die besagte Auflagefläche (2) mindestens eine auswechselbare Werkplatte (20) umfasst, wobei die besagten Stifte oder die anderen Zentrierungselemente mit der besagten auswechselbaren Werkplatte verbunden sind.

15. Die Vorrichtung eines der Ansprüche 1 bis 14, wobei die Unterseite der Vorrichtung angeordnet ist, um ein Palettieren zu ermöglichen.

16. Die Vorrichtung von Anspruch 15, wobei die Unterseite der Vorrichtung mindestens vier Füsse (8) aufweist.

17. Die Vorrichtung eines der Ansprüche 15 oder 16, mit mindestens vier Drucklufteinlässen, um das Öffnen der Flanschen, das Schliessen der Flansche, das Öffnen der Backen und das Schliessen der Backen zu steuern.

18. Werkstückbearbeitungsverfahren mit den folgenden Schritten:
a) Anordnen des besagten Werkstücks (1) auf der Auflagefläche (2) einer Werkstückhaltevorrichtung;
b) Halten des besagten Werkstücks gegen die besagte Auflagefläche mittels einem oder mehreren beweglichen Flanschen (5);
c) Bearbeiten des besagten Werkstücks;
**gekennzeichnet durch** einen Schritt von
d) Halten mindestens einer Portion (11) des besagten Werkstücks indem mindestens eine Backe (3) in einer zur besagten Auflagefläche (2) parallelen Ebene (X-Y) bewegt wird, um die besagte Portion **durch** seine Seitenflächen zu halten.

19. Das Verfahren von Anspruch 18, wobei die besagte Bearbeitung eine Fräsoperation der besagten Portion einschliesst, um sie vom Rest des Werkstücks zu trennen.

20. Das Verfahren von Anspruch 19, worin, am Ende des Fräsens:
die besagte Portion (11) durch die besagten Backen (3) gehalten wird,
der Rest des Werkstücks (1) durch die besagten Flanschen (5) gehalten wird.
